# FASCICULE DE BREVET EUROPEEN

(11) **EP 1 114 578 B1**
(45) Date de publication et mention de la délivrance du brevet: **03.03.2004**
(21) Numéro de dépôt: 00440002.4
(22) Date de dépôt: 06.01.2000
(51) Int. Cl.: A01G 17/08

(54) **Appareil pour attacher un ou plusieurs objets, tels que des sarments de vigne**
Gerät zum Anbinden eines oder mehrerer Objekte, wie z.B. Rebtriebe
Device for fixing one or more objects like vine shoots

(43) Date de publication de la demande: 11.07.2001
(73) Titulaire: Etudes et Creation E.C.B. Société à responsabilité Limitée à associé unique, 51200 Epernay (FR)
(72) Inventeur: Ballu, Jean-Louis, 51200 Epernay (FR)
(74) Mandataire: Rhein, Alain

(56) Documents cités:
- EP-A- 0 763 323
- WO-A-97/44999
- FR-A- 2 780 702
- US-A- 5 678 613

## Description

La présente invention concerne un appareil pour attacher au moyen d'un lien souple un ou plusieurs objets, tels que par exemple des sarments de vigne sur les fils de palissage.

Le liage de la vigne ou autres végétaux était traditionnellement réalisé au moyen de liens végétaux tels que du jonc, remplacés plus tard par de la ficelle ou du fil métallique, posés manuellement ou au moyen d'un outil.

Actuellement, les liens le plus fréquemment utilisés consistent en un fil métallique enrobé soit de papier, soit d'une matière plastique. Ce type de lien est passé autour du sarment et du fil métallique et ses deux extrémités sont solidarisées par une torsade. Le fil métallique assure le maintien, tandis que le papier ou la matière plastique évite l'étranglement de la végétation.

Le diamètre et la nature du fil métallique, généralement de l'acier, ainsi que la nature du papier ou de la matière plastique, du polypropylène, sont choisis de manière que les liens se dégradent dans le temps, afin d'obtenir un liage temporaire, à savoir de quelques mois, pour qu'il puisse être enlevé facilement, notamment avant la taille.

Les outils utilisés pour la pose d'un tel lien, permettent de le dévider d'une bobine, de le torsader et de le couper. Ils se présentent pour la plupart sous la forme d'une pince manoeuvrable manuellement, en sorte que, du fait du nombre de ligatures à réaliser, l'opération de liage devient vite fatigante pour l'utilisateur.

Afin de pallier cet inconvénient, il a été proposé, dans le document EP 0 763 323, un appareil électroportatif permettant de réaliser automatiquement et sans efforts la pose de ces liens.

Cependant, cet appareil présente également des inconvénients, en ce qui concerne notamment son maniement d'une part, et en ce qu'il est d'utilisation limitée d'autre part.

En effet, cet appareil se présente sous la forme d'un pistolet comportant à son extrémité un bec en forme de crochet et intérieurement des moyens, mus électriquement, permettant d'entraîner le lien et d'amener celui-ci dans ledit crochet lequel comporte à cet effet un guide, ainsi que des moyens aptes à saisir l'extrémité dudit lien pour la tordre avec le reste de celui-ci en amont dudit crochet.

En pratique, le crochet est placé autour du sarment et du fil de palissage à solidariser, tandis que le lien est poussé dans le guide jusqu'à ce que son extrémité libre en émerge pour être saisie et torsadée.

Le principal inconvénient de cet appareil réside dans le fait que le lien est poussé dans le guide du crochet, en sorte qu'il est indispensable que ledit lien ait une certaine rigidité, son fil en acier devant donc être d'un diamètre au moins égal à 0,5 mm. Or, plus le diamètre du fil d'acier est important, plus le temps de dégradation est long.

De plus, à longueur égale, une bobine d'un tel lien est plus lourde qu'une bobine de lien dont le fil d'acier est d'un diamètre inférieur.

De plus encore, on notera qu'en pratique, il est recommandé d'utiliser cet appareil avec un lien particulier dont le fil, en matière plastique, est plat, ceci afin d'en faciliter l'orientation lors du guidage et éviter son coincement, alors qu'un tel lien est d'un coût très supérieur aux liens de type classique.

Un autre inconvénient de cet appareil consiste dans le fait que l'opérateur doive aborder le sarment et le fil de palissage à solidariser par le dessus pour engager le crochet, geste peu ergonomique et entraînant des difficultés de dégagement du crochet.

Pour tenter de pallier cet inconvénient il est proposé que le crochet soit pivotant, mais cela présente l'inconvénient de compliquer le mécanisme de l'appareil.

La présente invention a pour but de remédier à ces divers inconvénients en proposant un appareil pour la pose de liens d'un maniement simple, et apte à utiliser des liens quelle que soit la nature de ceux-ci.

L'appareil objet de la présente invention se caractérise essentiellement en ce qu'il comporte d'une part un corps traversé longitudinalement par un lien conditionné extérieurement audit corps, et qui présente à son extrémité frontale une gorge transversale apte à permettre l'engagement du ou des objets à lier; d'autre part un moyen apte à tourner complètement autour du ou des objets engagés dans ladite gorge et à maintenir l'extrémité libre du lien en vue de réaliser une boucle partielle autour du ou desdits objets; et d'autre part encore, un moyen apte à fermer ladite boucle en torsadant les deux brins dudit lien en se positionnant à proximité du ou desdits objets, en s'engageant à l'intérieur dudit moyen apte à tourner autour de ceux-ci.

D'autres advantages de l'invention ressortiront des revendications dépendantes.

Selon un mode de réalisation particulier de l'appareil selon l'invention, le moyen apte à réaliser une boucle et le moyen apte à fermer celle-ci sont entraînés par un seul moteur électrique à deux sens de rotation associé à des moyens d'embrayage et à des moyens d'indexage, en sorte que lesdits moyens soient alternativement entraînés ou non selon le sens de rotation dudit moteur électrique.

Selon une caractéristique additionnelle de ce mode de réalisation particulier de l'appareil selon l'invention, les moyens d'indexage consistent en des trains d'engrenages de rapports de démultiplication choisis, dont l'un des composants présente un élément saillant apte à coopérer avec un moyen d'accrochage escamotable.

Selon une caractéristique additionnelle de l'appareil selon l'invention, le lien débouche au niveau du moyen permettant de réaliser la torsade, latéralement et à l'arrière de celui-ci.

Selon une autre caractéristique additionnelle de l'appareil selon l'invention, le moyen apte à tourner autour du ou des objets à lier, comporte un moyen de préhension et de coupe du lien, apte, au cours de la réalisation de la torsade, à lâcher l'extrémité libre du lien, puis, après la réalisation de la torsade, à saisir l'autre brin dudit lien et à le couper entre le point de maintien et ladite torsade.

Selon une autre caractéristique additionnelle de l'appareil selon l'invention, le moyen apte à tourner autour du ou des objets engagés dans la gorge, consiste en une pièce circulaire ouverte, en forme de C dont l'ouverture interne est concentrique au fond de ladite gorge, et susceptible de tourner axialement dans le corps, entraînée par engrènement.

Selon une autre caractéristique additionnelle de l'appareil selon l'invention, la surface extérieure de la pièce en forme de C est dentée et s'engrène sur deux roues dentées entraînées en rotation par un motoréducteur.

Selon une autre caractéristique additionnelle de l'appareil selon l'invention, le moyen apte à réaliser une torsade consiste en une hélice à une ou deux pales, susceptible d'être mue en rotation, et éventuellement mobile en translation axiale pour permettre son engagement dans la pièce en forme de C.

Selon une autre caractéristique additionnelle de l'appareil selon l'invention, l'hélice est portée par l'extrémité d'un tube à l'intérieur duquel passe le lien.

Selon une autre caractéristique additionnelle de l'appareil selon l'invention, le moyen de préhension et de coupe du lien est placé sur un bord de l'ouverture de la pièce en forme de C, sur le bord qui traverse le premier la gorge lors de la rotation de ladite pièce, et il comporte un bec consistant en une gorge étroite apte à coincer ledit lien, et un sabot de découpe destiné à coopérer avec un couteau solidaire du corps.

Selon une variante de l'appareil selon l'invention, une roue dentée est solidaire du tube et s'engrène sur une autre roue dentée mue en rotation par un motoréducteur, tandis qu'un levier est calé sur le tube en arrière de l'hélice, monté pivotant sur un pivot solidaire du corps, et mû par un électro-aimant afin de commander la translation axiale permettant l'engagement dans la pièce en forme de C du moyen apte à réaliser une torsade.

L'appareil selon l'invention présente de nombreux avantages par rapport aux appareils existants, et plus particulièrement celui décrit dans le document EP 0 763 323. En effet, il permet d'aborder la végétation frontalement, en sorte que l'opération est plus aisée pour l'utilisateur.

D'autre part, du fait que le lien soit tiré, et non pas poussé, cela autorise l'usage de liens de différents types, notamment des liens dont le fil d'acier est d'un petit diamètre, plus facilement dégradable.

D'autre part encore, le lien étant tiré il n'y a pas de risque de coincement de celui-ci, puisqu'il n'est pas nécessaire qu'il soit guidé.

Les avantages et les caractéristiques de l'appareil selon l'invention, ressortiront plus clairement de la description qui suit et qui se rapporte au dessin annexé, lequel en représente un mode de réalisation non limitatif.

Dans le dessin annexé :
- la figure 1 représente une vue schématique en coupe selon un plan longitudinal d'un premier mode de réalisation de l'appareil pour le liage selon l'invention.
- la figure 2 représente une vue schématique en coupe selon un plan transversal du même appareil.
- la figure 3 représente une vue schématique d'une partie du même appareil.
- les figures 4, 5, 6, 7, 8, 9 représentent des vues partielles en coupe selon un plan longitudinal du même appareil lors de phases successives d'une opération de liage.
- la figure 10 représente une vue schématique en coupe selon un plan longitudinal d'un second mode de réalisation de l'appareil selon l'invention.

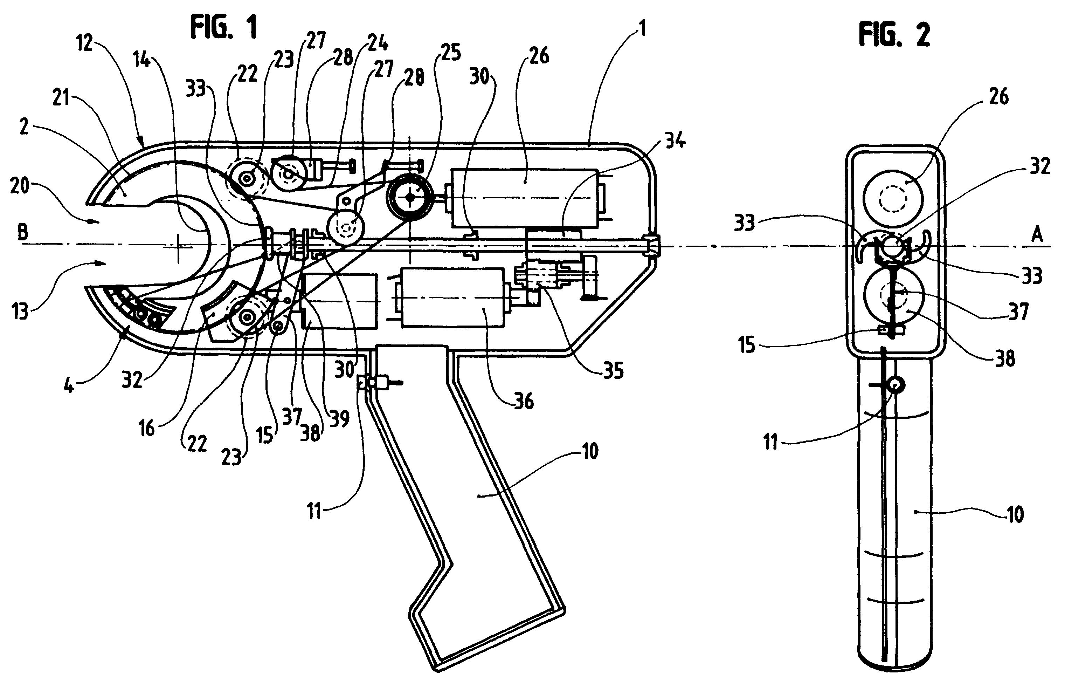

Si on se réfère à la figure 1, on peut voir que selon un premier mode de réalisation, un appareil pour le liage selon l'invention présente extérieurement la forme d'un pistolet, il comporte un corps 1 à l'intérieur duquel est logé le mécanisme permettant le liage et sur lequel est adaptée une poignée 10 munie d'un interrupteur de commande 11.

Le corps 1 présente à son extrémité frontale 12 une gorge transversale 13 en forme de U s'ouvrant vers l'avant du corps 1, dont le fond 14 arrondi permet de loger transversalement un sarment ou analogue, non représenté.

Dans l'extrémité frontale 12 peut tourner, selon un axe transversal A correspondant au centre du fond 14, une pièce 2 en forme de C et plus particulièrement en forme de rondelle présentant une ouverture 20, de manière que sa rotation puisse alternativement fermer et ouvrir la gorge 13 en tournant autour du fond 14 qui ainsi demeure ouvert latéralement.

La surface extérieure 21 de la pièce 2 est dentée et s'engrène sur deux roues dentées 22 jumelées avec des poulies 23 sur lesquelles passe une courroie crantée 24 entraînée en rotation par une poulie 25 elle-même mue par un motoréducteur 26.

On notera que les roues dentées 22 sont à une distance l'une de l'autre supérieure à la largeur de l'ouverture 20, de manière que lors de la rotation de la pièce 2, au moins l'une d'elles soit toujours en contact avec la surface extérieure 21.

D'autre part, la courroie crantée 24 passe sur des poulies de renvoi 27 associées à des moyens 28 de réglage de tension.

Si on se réfère également à la figure 2, on peut voir que le corps 1 comporte intérieurement, disposé longitudinalement selon un axe B coupant perpendiculairement l'axe A, un tube 3 monté en rotation libre dans deux paliers 30 dans lesquels il peut également se déplacer de façon limitée en translation axiale. L'extrémité avant 31 du tube 3, celle à proximité de la pièce 2, est munie d'un torsadeur 32 qui consiste en une hélice à deux pales recourbées 33, tandis que son extrémité arrière est munie d'une roue dentée 34 qui s'engrène sur une autre roue dentée 35 mue en rotation par un motoréducteur 36.

On notera que la roue dentée 34 est d'une dimension permettant qu'elle reste engrenée sur la roue dentée 35 quelle que soit la position du tube 3 dans sa translation axiale.

Le déplacement en translation axiale du tube 3 est réalisé par l'intermédiaire d'un levier 37 calé sur le tube 3 en arrière du torsadeur 32, monté pivotant sur un pivot 15 solidaire du corps 1, et mû par un électro-aimant 38.

On peut voir également sur la figure 1, que la pièce 2 comporte au niveau d'un bord de son ouverture 20, un moyen de préhension 4 et de coupe d'un lien 5, ce dernier passant dans le tube 3 en provenance d'un moyen de conditionnement, non représenté, pour émerger au niveau du torsadeur 32 par un orifice 39 pratiqué latéralement en arrière des pales 33.

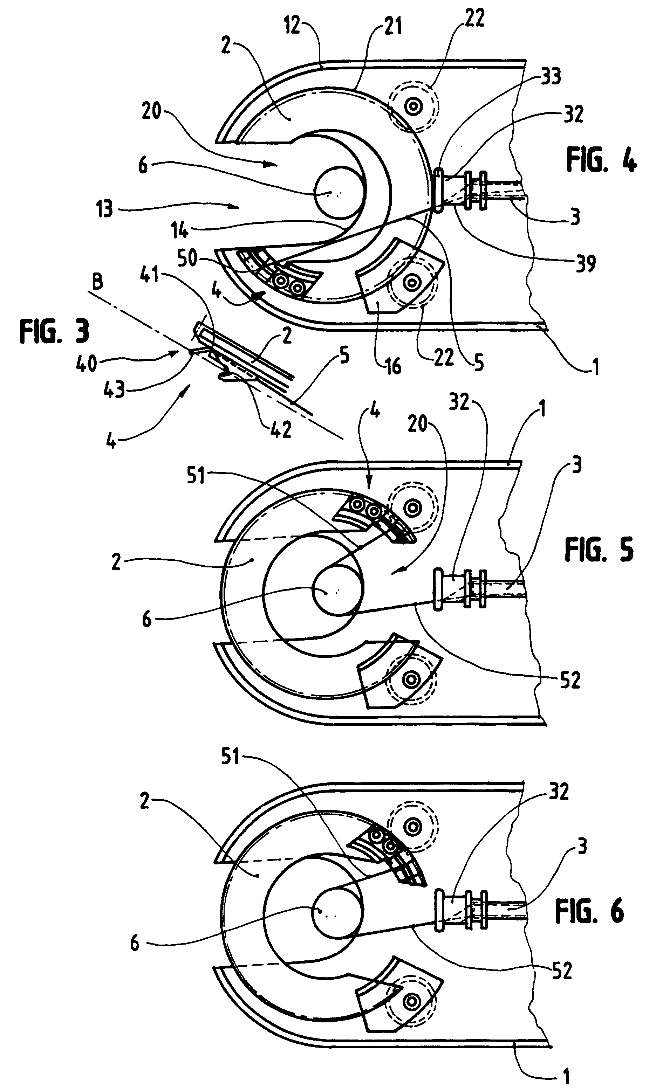

Si on se réfère à la figure 3 on peut voir le moyen de préhension et de coupe 4. Il est solidarisé latéralement à la pièce 2, et comporte un bec 40 consistant en une gorge étroite 41 apte à pincer le lien 5, et, dans un plan parallèle décalé, un sabot de découpe 42 destiné, en coopération avec un couteau 16 solidaire du corps 1 et visible sur la figure 1, à couper le lien 5.

Le sabot de découpe 42 est plus proche du centre de la pièce 2 que le bec 40, et est positionné sensiblement dans un plan comprenant l'axe B, tandis que le bec est plus proche du bord de l'ouverture 20 et que sa gorge 41 est légèrement décalée par rapport audit plan, par contre le bec comporte une extension 43 qui coupe ce plan et permet de rabattre le lien 5 comme cela sera expliqué plus loin.

Si on se réfère maintenant aux figures 4, 5, 6, 7, 8 et 9 on peut voir le fonctionnement de l'appareil pour le liage selon l'invention, lors d'une opération de liage.

Sur la figure 4, la configuration de l'appareil est conforme à celle représentée sur la figure 1, la pièce 2 est positionnée de manière que son ouverture 20 coïncide avec la gorge 13 en sorte que le fond 14 de celle-ci soit accessible, ce qui permet d'y engager un sarment ou analogue 6.

D'autre part, le tube 3 est dans sa position la plus arrière possible, c'est-à-dire que le torsadeur 32 est placé à faible distance de la pièce 2. En outre, le lien 5 passe dans le tube 3, sort par l'orifice 39, et son extrémité 50 est maintenue par le moyen de préhension 4 dans le bec 40.

Sur la figure 5, sous l'action du motoréducteur 26, de la courroie crantée 24, des poulies 23, non représentés, et des roues dentées 22, la pièce 2 a tourné d'un demi-tour, en sorte que le lien 5, entraîné par le moyen de préhension 4, passe autour du sarment 6 pour former une boucle partielle autour de celui-ci.

Sur la figure 6, on peut voir que la rotation de la pièce 2 a été légèrement prolongée de manière que les deux brins 51 et 52 du lien 5, respectivement en aval et en amont du sarment 6, soient sensiblement parallèles.

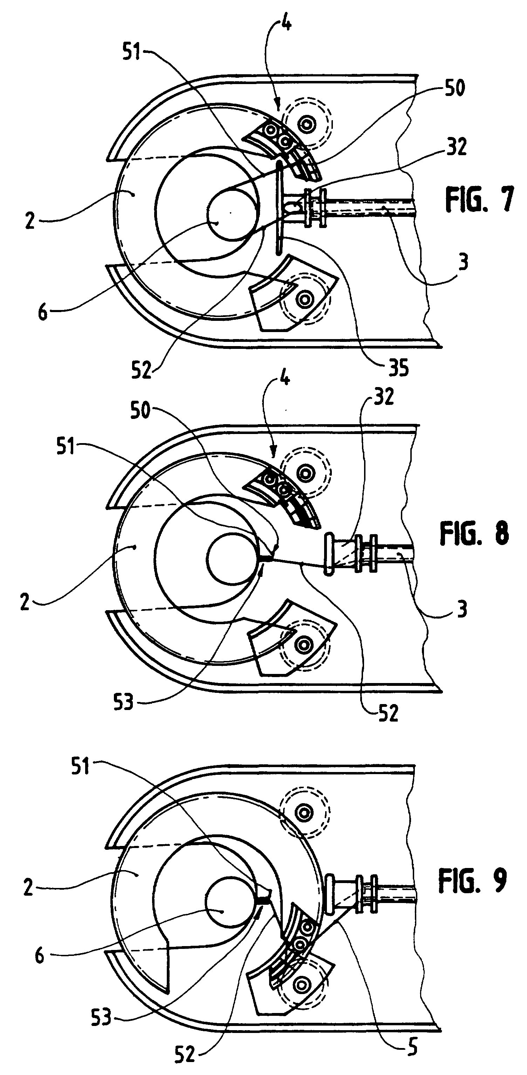

Sur la figure 7, on peut voir que la rotation de la pièce 2 a également permis que l'ouverture 20 de celle-ci soit en regard du torsadeur 32, lequel, sous l'action de l'électro-aimant 38, non représenté, est translaté vers le sarment 6 pour prendre place à l'intérieur de la pièce 2.

Sous l'action du motoréducteur 36, non représenté, le torsadeur 32 est mis en rotation, et les pales 33 de celui-ci agrippent les brins 51 et 52 du lien 5, du fait notamment que le brin 52 débouche latéralement du torsadeur 32 et passe sous les pales 33 de celui-ci.

Sur la figure 8, par la rotation du torsadeur 32 les brins 51 et 52 forment une torsade 53, et du fait de la traction exercée sur le brin 51, dans une direction sensiblement opposée à celle de son introduction dans le bec 40, l'extrémité 50 du lien s'est désengagée de celui-ci.

Sur la figure 9, le torsadeur 32 est ramené vers l'arrière, et la pièce 2 continue sa rotation tandis que le bec 40 coince le brin 52 et que le sabot de découpe 41 et couteau 16 le coupe, puis la pièce 2 reprend sa place initiale, prête pour un autre liage.

La préhension du lien 5 et sa coupe se déroulent de la manière suivante, l'extension 43 du bec 40 amène le lien 5 dans la gorge 41 où il est coincé, tandis qu'entre la torsade 53 et le bec 40, le brin 52 se cale sur le sabot de découpe 42 et que le couteau 16 le sectionne.

On notera que les deux motoréducteurs 26 et 36 sont commandés électroniquement pour permettre leur parfait synchronisme et leur arrêt dans des positions précises.

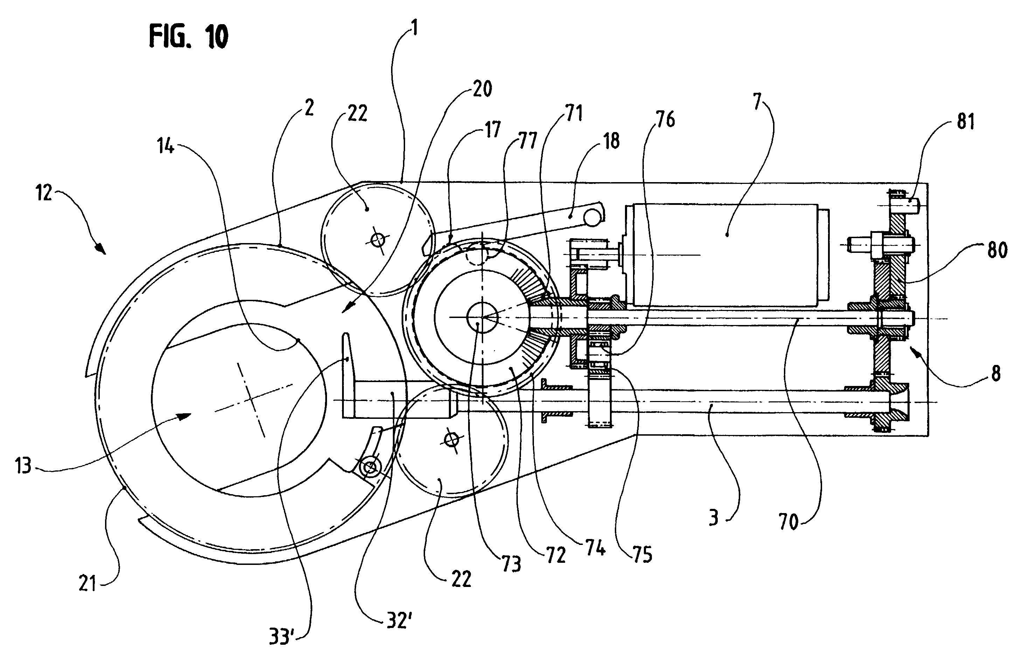

En référence maintenant à la figure 10, on peut voir un second mode de réalisation de l'appareil selon l'invention. Tout comme le premier mode de réalisation, le second comporte un corps 1 et présente à son extrémité frontale 12 une gorge transversale 13 en forme de U s'ouvrant vers l'avant du corps 1, et dont le fond 14 arrondi permet de loger transversalement un sarment ou analogue, non représenté. Dans cette extrémité frontale 12 peut tourner, selon un axe transversal correspondant au centre du fond 14, une pièce 2 en forme de C et plus particulièrement en forme de rondelle présentant une ouverture 20, de manière que sa rotation puisse alternativement fermer et ouvrir la gorge 13 en tournant autour du fond 14 qui ainsi demeure ouvert latéralement. Tout comme dans le premier mode de réalisation, la surface extérieure 21 de la pièce 2 est dentée et s'engrène sur deux roues dentées 22 aptes à être menées en rotation. De plus, il comporte un tube 3 à l'intérieur duquel passe le lien, non représenté, apte à être mû en rotation, et dont l'extrémité avant est munie d'un torsadeur 32' à proximité duquel peut sortir le lien. On notera que le torsadeur 32' est positionné latéralement par rapport au plan de pivotement de la pièce 2, en sorte que son recul n'est pas nécessaire lors de la rotation de la pièce 2, il est donc immobile en translation axiale.

La principale particularité du second mode de réalisation de l'appareil selon l'invention, consiste en ce que celui-ci comporte un seul moteur 7 à deux sens de rotation, associé à deux systèmes d'embrayage consistant en des trains d'engrenage incorporant une roue libre, en sorte que, selon son sens de rotation, le moteur 7 entraîne soit la pièce 2, soit le torsadeur 32'.

Le moteur 7 entraîne en rotation un arbre 70 dont une extrémité est équipée d'un pignon conique 71 engrené sur une roue conique 72 liée coaxialement par l'intermédiaire d'une roue libre 73 à une roue dentée 74 engrenée sur les roues dentées 22.

Par ailleurs, l'arbre 70 est lié en rotation au tube 3 par l'intermédiaire d'un pignon 75 montée sur une roue libre 76.

On comprendra que les roues libres 73 et 76 sont telles que lorsque la pièce 2 est entraînée, le torsadeur 32' est immobile, et réciproquement.

D'autre part, afin d'initialiser les positions d'une part de la pièce 2, et d'autre part du torsadeur 32' avant chaque cycle de liage, l'appareil comporte de moyens d'indexage.

La roue dentée 74 comporte ainsi inférieurement une goupille excentrée 77 destinée à coopérer avec l'échancrure 17 d'un bras 18 monté pivotant sur le corps 1 et rappelé élastiquement par un moyen du type ressort, non représenté, afin de marquer, en choisissant les bons rapports de démultiplication, les deux positions extrêmes de la pièce 2.

De la même manière, le tube 3, par son extrémité arrière, entraîne en rotation un train d'engrenages 8, dont une roue dentée 80 est munie d'une goupille 81 destinée à coopérer, afin de marquer la position de départ du torsadeur 32', avec l'échancrure d'un bras pivotant rappelé élastiquement, non représenté. On notera que le rapport de démultiplication du train d'engrenages 8 est fonction du nombre de tours nécessaire à la réalisation de la torsade.

On remarquera que le torsadeur 32' ne comporte qu'une seule pale 33', ce qui, du fait de l'indexage de la position du torsadeur 32' et de la position sensiblement centrale du lien en sortie du tube 3, est suffisant à la réalisation de la torsade.

La mise en oeuvre de ce second mode de réalisation de l'appareil selon l'invention est identique à celle du premier, les moyens de préhension et de coupe du lien étant similaires.

## Revendications

1. Appareil pour attacher au moyen d'un lien souple un ou plusieurs objets, tels que par exemple des sarments de vigne sur les fils de palissage, **caractérisé en ce qu'**il comporte d'une part un corps (1) traversé longitudinalement par un lien (5) conditionné extérieurement audit corps (1), et qui présente à son extrémité frontale (12) une gorge transversale (13) apte à permettre l'engagement du ou des objets (6) à lier; d'autre part un moyen (2) apte à tourner complètement autour du ou des objets (6) engagés dans ladite gorge (13) et à maintenir l'extrémité libre (50) dudit lien (5) en vue de réaliser une boucle partielle autour du ou desdits objets (6); et d'autre part encore, un moyen (32 ; 32') apte à fermer ladite boucle en torsadant les deux brins (51, 52) dudit lien (5) en se positionnant à proximité du ou desdits objets (6), en s'engageant à l'intérieur dudit moyen (2) apte à tourner autour de ceux-ci.

2. Appareil selon la revendication 1, **caractérisé en ce que** le moyen (2) apte à réaliser une boucle et le moyen (32 ; 32') apte à fermer celle-ci sont entraînés par un seul moteur électrique (7) à deux sens de rotation associé à des moyens d'embrayage (73 ; 76) et à des moyens d'indexage (77, 81), en sorte que lesdits moyens (2, 32 ; 32') soient alternativement entraînés ou non selon le sens de rotation dudit moteur électrique (7).

3. Appareil selon la revendication 2, **caractérisé en ce que** les moyens d'indexage consistent en des trains d'engrenages de rapports de démultiplication choisis, dont l'un des composants (74, 80) présente un élément saillant (77 ; 81) apte à coopérer avec un moyen d'accrochage escamotable (18).

4. Appareil selon l'une quelconque des revendications précédentes, **caractérisé en ce que** le lien (5) débouche au niveau du moyen (32 ; 32') permettant de réaliser une torsade (53), latéralement et à l'arrière de celui-ci.

5. Appareil selon l'une quelconque des revendications précédentes, **caractérisé en ce que** le moyen (2) apte à tourner autour du ou des objets (6) à lier comporte un moyen (4) de préhension et de coupe du lien, apte, au cours de la réalisation de la torsade (53), à lâcher l'extrémité libre (50) du lien (5), puis, après la réalisation de la torsade (53), à saisir l'autre brin (52) dudit lien (5) et à le couper entre le point de maintien et ladite torsade (53).

6. Appareil selon l'une quelconque des revendications précédentes, **caractérisé en ce que** le moyen apte à tourner autour du ou des objets (6) engagés dans la gorge (13), consiste en une pièce (2) circulaire ouverte, en forme de C dont l'ouverture interne (20) est concentrique au fond (14) de ladite gorge (13), et susceptible de tourner axialement dans le corps (1), entraînée par engrènement.

7. Appareil selon la revendication 6, **caractérisé en ce que** la surface extérieure (21) de la pièce (2) en forme de C est dentée et s'engrène sur deux roues dentées (22) entraînées en rotation par un motoréducteur (26 ; 7).

8. Appareil selon la revendication 7, **caractérisé** en que les roues dentées (22) sont à une distance l'une de l'autre supérieure à la largeur de l'ouverture (20) de la pièce (2) en forme de C, de manière que lors de la rotation de ladite pièce (2), au moins l'une d'elles soit toujours en contact avec la surface extérieure (21)de celle-ci.

9. Appareil selon l'une quelconque des revendications 5 à 8, **caractérisé en ce que** le moyen apte réaliser une torsade (53) consiste en une hélice (32 ; 32') à une ou deux pales (33 ; 33'), susceptible d'être mue en rotation, et éventuellement mobile en translation axiale pour permettre son engagement dans la pièce (2) en forme de C.

10. Appareil selon l'une quelconque des revendications 5 à 9, **caractérisé en ce que** le moyen (32 ; 32') apte réaliser une torsade (53) est porté par l'extrémité d'un tube (3) à l'intérieur duquel passe le lien (5).

11. Appareil selon l'une quelconque des revendications 5 à 10, **caractérisé en ce que** le moyen (4) de préhension et de coupe du lien (5) est solidarisé latéralement à la pièce (2) en forme de C sur un bord de l'ouverture (20) de celle-ci, sur le bord qui traverse le premier la gorge (13) lors de la rotation de ladite pièce (2), et il comporte un bec (40) consistant en une gorge étroite (41) apte à coincer ledit lien (5), et un sabot de découpe (42) destiné à coopérer avec un couteau (16) solidaire du corps (1).

12. Appareil selon la revendication 10 ou la revendication 11, **caractérisé en ce qu'**une roue dentée (34) est solidaire du tube (3) et s'engrène sur une autre roue dentée (35) mue en rotation par un motoréducteur (36), tandis qu'un levier (37) est calé sur le tube (3) en arrière de l'hélice (32), monté pivotant sur un pivot (15) solidaire du corps (1), et mû par un électro-aimant (38) afin de commander la translation axiale permettant l'engagement dans la pièce (2) en forme de C du moyen apte à réaliser une torsade.

## Claims

1. Device for fixing by means of a flexible strap one or several objects, such as e.g. vine shoots, to the tying-up wires, **characterised in that** it includes, on the one hand, a body (1) through which passes longitudinally a strap (5) externally secured to said body (1), and which has at its front end (12) a transversal groove (13) capable of allowing inserting the object or objects (6) to be bound; on the other hand, means (2) capable of being fully wound around the object or objects (6) inserted into said groove (13) and of holding the free end (50) of said strap (5) with a view to form a partial loop around said object or objects (6); and, still on the other hand, means (32 ; 32') capable of closing said loop through twisting both ends (51, 52) of said strap (5) by being positioned close to said objects (6), by inserting themselves into said means (2) capable of rotating about the latter.

2. Device according to claim 1, **characterised in that** the means (2) capable of making a loop and the means (32 ; 32') capable of closing the latter are driven by one single electric motor (7) with two directions of rotation associated with clutch means (73 ; 76) and with indexing means (77, 81), so that said means (2, 32 ; 32') are alternately driven or not depending on the direction of rotation of said electric motor (7).

3. Device according to claim 2, **characterised in that** the indexing means consist of a cluster of gear wheels with selected gearing ratios, one of the components (74, 80) of which has a protruding member (77 ; 81) capable of co-operating with retractile coupling means (18).

4. Device according to any of the preceding claims, **characterised in that** the strap (5) ends at the level of the means (32 ; 32') allowing bringing about a twist (53), laterally and at the rear of the latter.

5. Device according to any of the preceding claims, **characterised in that** the means (2) capable of rotating about the object or objects (6) to be bound includes means (4) for seizing and cutting the strap, capable, when bringing about the twist (53), of releasing the free end (50) of the strap (5), then, after bringing about the twist (53), of seizing the other end (52) of said strap (5) and of cutting between the holding point and said twist (53).

6. Device according to any of the preceding claims, **characterised in that** the means capable of rotating about the object or objects (6) inserted into the groove (13) consists of an open circular C-shaped part (2) the internal opening (20) of which is concentric to the bottom (14) of said groove (13) and capable of axially rotating in the body (1), driven through engagement.

7. Device according to claim 6, **characterised in that** the outer surface (21) of the C-shaped part (2) is toothed and engages with two tooth-wheels (22) rotationally driven by a motor gear (26 ; 7).

8. Device according to claim 7, **characterised in that** the tooth-wheels (22) are located at a distance from each other larger than the width of the opening (20) of the C-shaped part (2), so that during the rotation of said part (2) at least one of them is always in contact with the outer surface (21) of the latter.

9. Device according to any of claims 5 to 8, **characterised in that** the means capable of bringing about a twist (53) consists of a helix (33 ; 32') with one or two blades (33 ; 33') capable of being put into rotation and eventually movable in axial translation, in order to allow its insertion into the C-shaped part (2).

10. Device according to any of claims 5 to 9, **characterised in that** the means (32; 32') capable of bringing about a twist (53) is borne by the end of a tube (3) inside which passes the strap (5).

11. Device according to any of claims 5 to 10, **characterised in that** the means (4) for seizing and cutting the strap (5) is made laterally integral with the C-shaped part (2) on an edge of the opening (20) of the latter, on the edge that passes in the first place through the groove (13) during the rotation of said part (2), and **in that** it includes a mouth (40) consisting of a narrow groove (41) capable of clamping said strap (5), and a cutting shoe (42) aimed at co-operating with a knife (16) integral with the body (1).

12. Device according to claim 10 or claim 11, **characterised in that** a tooth-wheel (34) is integral with the tube (3) and engages with another tooth-wheel (35) rotationally driven by a motor gear (36), whereas a lever (37) is blocked on the tube (3), behind the helix (32), pivotally mounted on a pivot (15) integral with the body (1) and driven by an electromagnet (38) in order to control the axial translation allowing inserting into the C-shaped part (2) the means capable of bringing about a twist.

## Patentansprüche

1. Gerät zum Anbinden mittels einer biegsamen Binde von einem oder mehreren Gegenständen, wie z.B. Rebranken an den Anbinddrähten, **dadurch gekennzeichnet, daß** es, einerseits, einen Körper umfaßt, der in Längsrichtung von einer außen am besagten Körper (1) befestigten Binde (5) durchsetzt wird, welche an ihrem Stirnende (12) eine Querrille (13) aufweist, fähig, das Hineinführen des bzw. der zu bindenden Gegenstände (6) zu erlauben; andererseits, ein Mittel (2), fähig, völlig um den bzw. die in der besagten Rille (13) hineingeführten Gegenstände herum gewunden zu werden (6) und das freie Ende (50) der besagten Binde (5) festzuhalten, um eine teilweise Schleife um den bzw. die besagten Gegenstände (6) herum zu bilden; und, andererseits noch, ein Mittel (32 ; 32'), fähig, die besagte Schleife zu schließen, indem es sich nah an dem bzw. den besagten Gegenständen (6) positioniert, indem es in das besagte Mittel (2), fähig, um diese letzten herum zu drehen, hineingeführt wird.

2. Gerät nach Anspruch 1, **dadurch gekennzeichnet, daß** das Mittel (2), fähig, eine Schleife zu bilden, und das Mittel (32; 32'), fähig, diese letzte zu schließen, über einen einzigen Elektromotor (7) mit zwei Drehungrichtungen, der Kupplungsmitteln (73 ; 76) und Indexierungsmitteln (77, 81) zugeordnet ist, angetrieben werden, derart, daß die besagten Mittel (2, 32; 32') je nach der Drehrichtung des besagten Elektromotors (7) abwechselnd angetrieben werden oder nicht.

3. Gerät nach Anspruch 2, **dadurch gekennzeichnet, daß** die Indexierungsmittel aus einem mehrgliedrigen Zahnradgetriebe mit gewählten Getriebeverhältnissen bestehen, von dem einer der Bestandteile (74, 80) ein vorspringendes Glied (77 ; 81) aufweist, fähig, mit einem einziehbaren Kupplungsmittel (18) zusammenzuwirken.

4. Gerät nach irgendeinem der vorgehenden Ansprüche, **dadurch gekennzeichnet, daß** die Binde (5) im Bereich des Mittels (32; 32'), das es erlaubt, eine Torsion (53) zustandezubringen, seitlich und an der Rückseite dieser letzten ausmündet.

5. Gerät nach irgendeinem der vorgehenden Ansprüche, **dadurch gekennzeichnet, daß** das Mittel (2), fähig, um den bzw. die zu bindenden Gegenstände (6) herum zu drehen, ein Mittel (4) zum Greifen und zum Schneiden der Binde umfaßt, fähig, während des Zustandebringens der Torsion (53) das freie Ende (50) der Binde (5) loszulassen, anschließend, nach dem Zustandebringen der Torsion (53), das andere Ende (52) der besagten Binde (5) zu greifen und diese letzte zwischen dem Haltepunkt und der besagten Torsion (53) abzuschneiden.

6. Gerät nach irgendeinem der vorgehenden Ansprüche, **dadurch gekennzeichnet, daß** das Mittel, fähig, um den bzw. die in der Rille (13) eingeführten Gegenstände (6) herum zu drehen, aus einem geöffneten, kreisförmigen, C-förmigen Teil (2) besteht, dessen innere Öffnung (20) konzentrisch zum Boden (14) der besagten Rille (13) und fähig ist, axial im Körper (1) zu drehen, wobei sie durch Ineingreifen angetrieben wird.

7. Gerät nach Anspruch 6, **dadurch gekennzeichnet, daß** die äußere Oberfläche (21) des C-förmigen Teils (2) Zähne aufweist und in zwei durch ein Motorgetriebe (26; 7) in Drehung angetriebene Zahnräder (22) eingreift.

8. Gerät nach Anspruch 7, **dadurch gekennzeichnet, daß** die Zahnräder (22) um eine Entfernung von einander beabstandet sind, die größer ist als die Breite der Öffnung (20) des C-förmigen Teils (2), derart, daß während der Drehung des besagten Teils (2) mindestens eins davon immer mit der äußeren Oberfläche (21) dieses letzten in Berührung steht.

9. Gerät nach irgendeinem der Ansprüche 5 bis 8, **dadurch gekennzeichnet, daß** das Mittel, fähig, eine Torsion (53) zustandezubringen, aus einer Schraube (33 ; 32') mit einer oder zwei Schaufeln (33; 33') besteht, die fähig ist, drehbar angetrieben zu werden, und gegebenfalls axial translationsbeweglich ist, um ihre Einführung in das C-förmige Teil (2) zu erlauben.

10. Gerät nach irgendeinem der Ansprüche 5 bis 9, **dadurch gekennzeichnet, daß** das Mittel (32 ; 32'), fähig, eine Torsion (53) zustandezubringen, vom Ende eines Rohres (3) getragen wird, durch das die Binde (5) geht.

11. Gerät nach irgendeinem der Ansprüche 5 bis 10, **dadurch gekennzeichnet, daß** das Mittel (4) zum Greifen und zum Schneiden der Binde (5) seitlich fest mit dem C-förmigen Teil (2) auf einem Rand der Öffnung (20) dieses letzten verbunden wird, auf demjenigen Rand, der während der Drehung des besagten Teils (2) an erster Stelle durch die Rille (13) fährt, und es einen Schnabel (40) umfaßt, der aus einer schmalen Rille besteht (41), geeignet, die besagte Binde (5) festzuklemmen, und einen Schneideschuh (42), der dazu bestimmt ist, mit einem fest mit dem Körper (1) verbundenen Messer (16) zusammenzuwirken.

12. Gerät nach Anspruch 10 oder Anspruch 11, **dadurch gekennzeichnet, daß** ein Zahnrad (34) fest mit dem Rohr (3) verbunden ist und in ein weiteres Zahnrad (35) eingreift, das über ein Motorgetriebe (36) drehbar angetrieben wird, während ein Hebel (37) auf dem Rohr (3), hinter der Schraube (32) blockiert wird, das schwenkbar auf einem fest mit dem Körper (1) verbundenen Zapfen (15) montiert ist und durch einen Elektromagneten (38) bewogen wird, um die axiale Translationsbewegung zu steuern, die die Einführung in den C-förmigen Teil (2) des Mittels, fähig, eine Torsion zustandezubringen, erlaubt.
